# EUROPEAN PATENT SPECIFICATION

(11) **EP 2 074 783 B1**
(45) Date of publication and mention of the grant of the patent: **21.07.2010**
(21) Application number: 07838893.1
(22) Date of filing: 26.09.2007
(51) Int. Cl.: H04L 27/26, H04L 5/02

(54) **Method for peak-to-average power ratio reduction in telecommunication systems**
Verfahren zur Reduktion des Verhältnisses der Spitzen- zur Mittelleistung in Telekommunikationssystemen
Procédé pour réduire le rapport de puissance entre maximum et moyenne dans des systèmes de télécommunication

(30) Priority: 03.10.2006 GB 0619490
(43) Date of publication of application: 01.07.2009
(73) Proprietor: Alcatel-Lucent USA Inc., Murray Hill, New Jersey 07974 (US)
(72) Inventor: BACHL, Rainer, Walter, 90425 Nuremberg (DE); CHENG, Fang-Chen, Randolph, NJ 07869 (US); SONG, Lei, Randolph, NJ 07869 (US)
(74) Representative: Schmidt, Werner Karl
(86) International application number: PCT/US2007/020787
(87) International publication number: WO 2008/042189

(56) References cited:
- US-A1- 2004 005 014
- US-A1- 2005 254 587
- JAE HONG LEE ET AL: "Modulation, coding and signal processing for wireless communications - An overview of peak-to-average power ratio reduction techniques for multicarrier transmission" IEEE WIRELESS COMMUNICATIONS, IEEE SERVICE CENTER, PISCATAWAY, NJ, US, vol. 12, no. 2, April 2005 (2005-04), pages 56-65, XP011130574 ISSN: 1536-1284

## Description

### Field of the Invention

This invention generally relates to communication. More particularly, this invention relates to power control in communications.

### Description of the Related Art

Wireless and wireline communication systems are well known and in widespread use. There are a variety of challenges associated with facilitating successful and reliable communications. One is managing power levels.

Multi-carrier transmission is often used in wireline and wireless applications, for example with Discrete Multitone Transmission (DMT) for Digital Subscriber Line (DSL) techniques and Orthogonal Frequency Division Multiplexing (OFDM) for WLAN, WiMAX, DVB or the forthcoming E-UTRA wireless communications standards. A major drawback of multi-carrier transmissions is the high peak-to-average power ratio (PAPR) of the transmit signal. A high PAPR requires a large power amplifier back-off from maximum power so that the operation of the power amplifier remains approximately linear, which in turn reduces the average transmit power and the power efficiency of a particular power amplifier.

Many techniques have been suggested to reduce PAPR including Partial Transmit Sequences (PTS), clipping, adaptive constellation extension, tone injection and tone reservation.

Among these techniques, application of PTS seems to be particularly advantageous, since it does not introduce any errors in the in-band transmit signal, it causes no out-of-band emissions and it does not increase or decrease the output power of the transmit signal. As known, PTS applies one rotation factor to N nonoverlapping subvectors, respectively. Every subvector is characterized by multiplication with one rotation factor per OFDM symbol. The rotation factors are usually chosen from a discrete set of rotation factors at the unit circle, e.g. {1,j,-1,-j}, such that transmit energy is preserved.

The other techniques mentioned above each have some disadvantages. Clipping causes in-band and out-of-band distortions. Adaptive constellation extension and tone injection cause the transmit power to vary and require specific receiver designs. Tone reservation and partial transmit sequences reduce the capacity or data rate of the transmission system.

### SUMMARY

An exemplary method of peak-to-average power ratio (PAPR) reduction in a multiple sub-carrier communications system includes selecting a PAPR reduction method from a plurality of PAPR reduction methods dependent upon a modulation scheme in use for a set of sub-carriers. The selected PAPR reduction method is applied to the set of the sub-carriers.

Even though the dependency of PAPR processing on modulation schemes is disclosed in the prior art document US 2004/005014, the type of PAPR reduction method is not changed in that document.

The various features and advantages of this invention will become apparent to those skilled in the art from the following detailed description. The drawings that accompany the detailed description can be briefly described as follows.

### BRIEF DESCRIPTION OF THE DRAWING

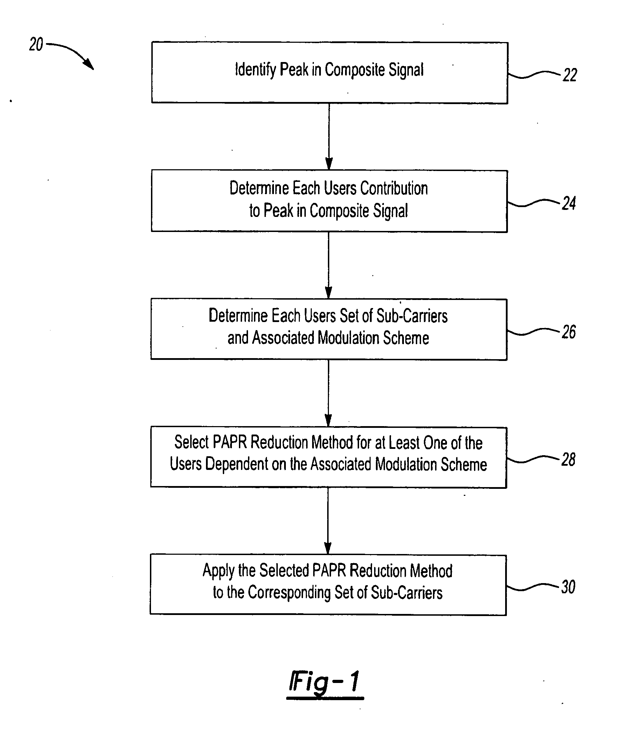

Figure 1 is a flow chart diagram summarizing an example procedure used with an embodiment of this invention.

### DETAILED DESCRIPTION

Figure 1 includes a flow chart diagram 20 that summarizes an example approach for reducing peak-to-average power ratio (PAPR) when composite signals are used in communications. This example begins at 22 where a peak in a composite signal is identified. In one example, this occurs in an over-sampled domain that approximates an analog signal because the amplifier used with the composite signal has an analog waveform.

At 24, the contribution to the identified peak of each user of the composite signal is determined. At 26 the set of sub-carriers used by each user and the modulation scheme in use on each set of sub-carriers are determined. In most circumstances such information is already known by the communication system in which the composite signal is being used.

At 28, a PAPR reduction method is selected for at least one of the users. In most circumstances, a plurality of users will have a contribution to the peak of the composite signal such that a PAPR reduction method will be useful for each corresponding set of sub-carriers. One feature of this example is that the modulation scheme in use on each set of sub-carriers dictates which PAPR reduction method is selected for the corresponding set of sub-carriers. One feature of this approach is that it takes advantage of the differing requirements associated with users that have different channel conditions.

For example, users having good channel conditions can use high order modulation and coding rates. Lesser quality channel conditions are not necessarily compatible with such high order modulation techniques. Different modulation schemes have different requirements. For example, lower order modulation techniques can have higher errors introduced as a result of applying a PAPR reduction method compared to higher order modulation techniques. Therefore, using different PAPR reduction methods for sets of sub-carriers having different modulation techniques in use allows for uniquely addressing the requirements associated with a given set of sub-carriers.

In one example, the introduced PAPR method(s) do not affect pilot symbols such that the pilot symbols are transmitted without modifications to permit reliable and simple channel estimation in the receiver.

In one example, when a set of sub-carriers has an associated high order modulation technique in use, the PAPR reduction method of choice is a partial transmit sequence (PTS) method. In one example, PTS is only applied to a set of sub-carriers having a higher modulation schemes in use because the additional overhead for transmitting the information about the rotation factors is small compared to the data rate for these users. Every user employing 64 QAM (possibly also 16 QAM) modulation will have the OFDM symbols rotated by either one of the factors {+1,j,-1,-j} which requires 2 bits of extra information per OFDM symbol. In one example, all sub-carriers for a particular user are rotated with the same factor. The overhead in additional control signaling for conveying the information about the rotation factors in such an example is relatively small. For E-UTRA applications with resource blocks for user allocation consisting of 12 sub-carriers, respectively, the control signaling overhead for 16 QAM users is approximately 2/48, the control signaling overhead for 64 QAM is approximately 2/72.

PTS has the advantage that the transmission power setting that is decided by the scheduler is not changed by the PAPR method. Furthermore, PTS does not introduce any distortion, which is particularly important for the higher modulations, since these are very sensitive towards modulation errors, which are measured by error vector magnitude (EVM).

Signals having lower order associated modulation techniques such as QPSK modulated signals are less sensitive towards modulation errors and more tolerant towards EVM. Since EVM requirements are specified modulation specific in E-UTRA, and EVM requirements are less stringent for QPSK than those for higher modulation techniques, it is possible to introduce a limited amount of signal distortion in QPSK subcarrier signals with the intention of lowering the PAPR.

It is also easier to introduce other alternative PAPR reduction methods for QPSK subcarriers only. In particular, adaptive constellation extension or tone injection can be defined for QPSK modulated signals with a moderate increase in receiver complexity, while the same would be significantly more difficult for higher modulations.

Other example PAPR reduction methods that are used in some examples include clipping, adaptive constellation extension, tone reservation and tone injection. Given this description, those skilled in the art will realize which PAPR reduction method(s) will work well with a particular modulation scheme to meet the needs of their particular situation.

At 30, the selected PAPR reduction method is applied to the corresponding set of subcarriers. The applied PAPR reduction method(s) are intended to reduce a magnitude of the peak of the composite signal.

In one example, at least two users have a contribution to the peak of the composite signal that warrant applying PAPR reduction to their respective sub-carriers. If the different users have different modulation schemes in use on their assigned sub-carriers at a given time, then different PAPR reduction methods are selected and used for their respective sets of sub-carriers.

In one example, at least one and in some cases a plurality of sub-carriers that are temporarily or permanently unused and do not carry any modulated data symbols, can be employed to introduce a compensation signal for lowering the PAPR. For sub-carriers that are permanently used for compensation of PAPR, this technique is known as tone reservation method.

One feature of the disclosed examples is that they allow for cost savings in communication system equipment. For example, lower PAPR implies that lower power amplifier back-off is required and the power efficiency of the power amplifier is increased. In other words, with the disclosed examples, it is possible to avoid requiring more expensive amplifiers to accommodate higher PAPR that would exist if the disclosed techniques were not employed.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of peak-to-average power ratio, PAPR, reduction in a multiple sub-carrier communications system wherein different modulation schemes are used for different sets of the sub-carriers, comprising the steps of:
selecting a PAPR reduction method from a plurality of PAPR reduction methods dependent upon a modulation scheme in use for a set of sub-carriers by automatically selecting the PAPR reduction method to be applied to each set of sub-carriers, respectively, dependent on the corresponding modulation scheme in use for each set;
**characterized by**
applying a first PAPR reduction method to a first one of the sets of the sub-carriers that uses a first modulation scheme, the first PAPR reduction method comprising a partial transmit sequences, PTS, PAPR reduction method; and
applying a second, different type of PAPR reduction method to a second one of the sets of sub-carriers that uses a second modulation scheme, the second modulation scheme being a lower modulation scheme than the first modulation scheme.

2. The method according to claim 1, wherein the second PAPR reduction method comprises clipping.

3. The method according to claim 1, wherein the second PAPR reduction method comprises adaptive constellation extension.

4. The method according to claim 1, wherein the second PAPR reduction method comprises tone injection.

5. The method according to claim 1, wherein the first modulation scheme is a 16 QAM modulation scheme.

6. The method according to claim 1, wherein the first modulation scheme is one of a 64 QAM or a modulation scheme higher than 64 QAM.

7. The method according to claim 1, wherein there are at least two users using different sets of sub-carriers at one time, each of the sets using a different modulation scheme and comprising
using at least two different PAPR reduction methods operate in respect of said at least two users.

8. The method according to claim 1, comprising
carrying a compensation signal for PAPR reduction on a subcarrier that is not used for user data.

9. The method of claim 1, comprising
determining the modulation scheme in use for the set of sub-carriers.

10. The method of claim 1, comprising
determining a peak in a composite signal including the set of sub-carriers;
determining a contribution to the peak of at least one user;
determining a modulation scheme used for the at least one user; and
selecting the PAPR reduction method for the at least one user dependent on the determined modulation scheme used for the at least one user.

11. The method of claim 10, comprising
determining the contribution to the peak of each of a plurality of users;
determining a modulation scheme used for each of the plurality of users; and
selecting the PAPR reduction method for each of the plurality of users dependent on the corresponding determined modulation scheme for each user, respectively.

12. The method of claim any of the preceding claims, comprising
using the selected PAPR reduction method for reducing a magnitude of a peak of a composite signal including the set of sub-carriers.

## Patentansprüche

1. Ein Verfahren zur Reduktion des Verhältnisses der Spitzen- zur Mittelleistung, PAPR, in einem Kommunikationssystem mit mehreren Hilfsträgern, wobei verschiedene Modulationsschemen für verschiedene Gruppen der Hilfsträger verwendet werden, wobei das Verfahren die folgenden Schritte umfasst:
Auswählen eines PAPR-Reduktionsverfahrens aus einer Mehrzahl von PAPR-Reduktionsverfahren in Abhängigkeit von einem für eine Gruppe von Hilfsträgern verwendeten Modulationsschema durch automatisches Auswählen des für jede Gruppe von Hilfsträgern jeweils anwendbaren PAPR-Reduktionsverfahrens in Abhängigkeit von dem entsprechenden für jede Gruppe verwendeten Modulationsschema;
**gekennzeichnet durch**
Anwenden eines ersten PAPR-Reduktionsverfahrens auf eine erste der Gruppen von Hilfsträgern, welche ein erstes Modulationsschema verwendet, wobei das erste PAPR-Reduktionsverfahren ein Teilsendefolgen-, PTS, PAPR-Reduktionsverfahren umfasst; und
Anwenden eines zweiten, verschiedenen Typs des PAPR-Reduktionsverfahrens auf eine zweite der Gruppen von Hilfsträgern, welche ein zweites Modulationsschema verwendet, wobei das zweite Modulationsschema ein niedrigeres Modulationsschema als das erste Modulationsschema ist.

2. Das Verfahren nach Anspruch 1, wobei das zweite PAPR-Reduktionsverfahren das Clipping umfasst.

3. Das Verfahren nach Anspruch 1, wobei das zweite PAPR-Reduktionsverfahren die adaptive Konstellationserweiterung umfasst.

4. Das Verfahren nach Anspruch 1, wobei das zweite PAPR-Reduktionsverfahren die Toneinkopplung umfasst.

5. Das Verfahren nach Anspruch 1, wobei das erste Modulationsschema ein 16-QAM- Modulationsschema ist.

6. Das Verfahren nach Anspruch 1, wobei das erste Modulationsschema entweder eine 64-QAM oder ein Modulationsschema über 64-QAM ist.

7. Das Verfahren nach Anspruch 1, wobei mindestens zwei Benutzer verschiedene Gruppen von Hilfsträgern gleichzeitig benutzen, wobei eine jede der Gruppen ein verschiedenes Modulationsschema verwendet, und umfassend
Verwenden von mindestens zwei verschiedenen PAPR-Reduktionsverfahren in Bezug auf die besagten mindestens zwei Benutzer.

8. Das Verfahren nach Anspruch 1, umfassend
Transportieren eines Kompensationssignals für die PAPR-Reduktion auf einem Hilfsträger, welcher nicht für Benutzerdaten verwendet wird.

9. Das Verfahren nach Anspruch 1, umfassend
Ermitteln des Modulationsschemas, welches für die Gruppe von Hilfsträgern verwendet wird.

10. Das Verfahren nach Anspruch 1, umfassend
Ermitteln einer Leistungsspitze in einem zusammengesetzten Signal, welches die Gruppe von Hilfsträgern enthält;
Ermitteln eines Beitrags zu der Leistungsspitze mindestens eines Benutzers;
Ermitteln eines Modulationsschemas, welches für den mindestens einen Benutzer verwendet wird, und
Auswählen des PAPR-Reduktionsverfahrens für den mindestens einen Benutzer in Abhängigkeit von dem ermittelten Modulationsschema, welches für den mindestens einen Benutzer verwendet wird.

11. Das Verfahren nach Anspruch 10, umfassend
Ermitteln des Beitrags zu der Leistungsspitze eines jeden der Mehrzahl von Benutzern;
Ermitteln eines Modulationsschemas, welches für einen jeden der Mehrzahl von Benutzern verwendet wird; und
Auswählen des PAPR-Reduktionsverfahrens für einen jeden der Mehrzahl von Benutzern in Abhängigkeit von dem jeweils entsprechenden ermittelten Modulationsschema für jeden Benutzer.

12. Das Verfahren nach einem beliebigen der vorstehenden Ansprüche, umfassend
das Verwenden des ausgewählten PAPR-Reduktionsverfahrens zum Reduzieren einer Größe einer Leistungsspitze eines zusammengesetzten Signals, welches die Gruppe der Hilfsträger enthält.

## Revendications

1. Procédé de réduction du rapport de puissance crête à moyenne, PAPR, dans un système de communication à sous-porteuses multiples, dans lequel différents schémas de modulation sont utilisés pour différents groupes des sous-porteuses, comprenant les étapes suivantes :
la sélection d'une méthode de réduction du PAPR parmi une pluralité de méthodes de réduction du PAPR en fonction d'un schéma de modulation utilisé pour un groupe de sous-porteuses par la sélection automatique de la méthode de réduction du PAPR à appliquer à chaque groupe de sous-porteuses, respectivement, en fonction du schéma de modulation correspondant utilisé pour chaque groupe ;
**caractérisé par**
l'application d'une première méthode de réduction du PAPR à un premier des groupes de sous-porteuses qui utilise un premier schéma de modulation, la première méthode de réduction du PAPR comprenant une méthode de réduction du PAPR par séquences de transmission partielles, PTS ; et
l'application d'une deuxième méthode de réduction du PAPR différente à un deuxième des groupes de sous-porteuses qui utilise un deuxième schéma de modulation, le deuxième schéma de modulation étant un schéma de modulation inférieur au premier schéma de modulation.

2. Procédé selon la revendication 1, dans lequel la deuxième méthode de réduction du PAPR comprend un écrêtage.

3. Procédé selon la revendication 1, dans lequel la deuxième méthode de réduction du PAPR comprend une extension de constellation adaptative.

4. Procédé selon la revendication 1, dans lequel la deuxième méthode de réduction du PAPR comprend une injection de tonalité.

5. Procédé selon la revendication 1, dans lequel le premier schéma de modulation est un schéma de modulation 16 QAM.

6. Procédé selon la revendication 1, dans lequel le premier schéma de modulation est l'un d'un schéma de modulation 64 QAM et d'un schéma de modulation supérieur à 64 QAM.

7. Procédé selon la revendication 1, dans lequel au moins deux utilisateurs utilisent différents groupes de sous-porteuses en même temps, chacun des groupes utilisant un schéma de modulation différent, et comprenant
l'utilisation d'au moins deux méthodes de réduction du PAPR différentes en relation avec lesdits au moins deux utilisateurs.

8. Procédé selon la revendication 1, comprenant
le transport d'un signal de compensation pour la réduction du PAPR sur une sous-porteuse qui n'est pas utilisée pour les données d'utilisateur.

9. Procédé selon la revendication 1, comprenant
la détermination du schéma de modulation utilisé pour le groupe de sous-porteuses.

10. Procédé selon la revendication 1, comprenant
la détermination d'une crête dans un signal composite comprenant le groupe de sous-porteuses;
la détermination d'une contribution à la crête d'au moins un utilisateur ;
la détermination d'un schéma de modulation utilisé pour l'au moins un utilisateur, et
la sélection de la méthode de réduction du PAPR pour l'au moins un utilisateur en fonction du schéma de modulation déterminé utilisé pour l'au moins un utilisateur.

11. Procédé selon la revendication 10, comprenant
la détermination de la contribution à la crête de chacun d'une pluralité d'utilisateurs ;
la détermination d'un schéma de modulation utilisé pour chacun de la pluralité d'utilisateurs ; et
la sélection de la méthode de réduction du PAPR pour chacun de la pluralité d'utilisateurs en fonction du schéma de modulation déterminé correspondant pour chaque utilisateur, respectivement.

12. Procédé selon l'une quelconque des revendications précédentes, comprenant
l'utilisation de la méthode de réduction du PAPR sélectionnée pour réduire une amplitude de crête d'un signal composite comprenant le groupe de sous-porteuses.
